# EUROPÄISCHE PATENTSCHRIFT

(11) **EP 1 279 584 B1**
(45) Veröffentlichungstag und Bekanntmachung des Hinweises auf die Patenterteilung: **10.05.2006**
(21) Anmeldenummer: 01118394.4
(22) Anmeldetag: 28.07.2001
(51) Int. Cl.: B62D 5/04

(54) **Benutzung der elektrischen Lenkunterstützung zum Unterdrücken von Bremsvibrationen**
Electrical steering assistant suppressing brake-induced vibrations
Commande électrique de direction assistée électrique, supprimant les vibrations dûes au freinage

(43) Veröffentlichungstag der Anmeldung: 29.01.2003
(73) Patentinhaber: Ford Global Technologies, LLC, Dearborn, MI 48126 (US)
(72) Erfinder: Presser, Stephan, 50259 Pulheim (DE); Branger, Eric Leonard, 50670 Köln (DE); Eidam, Dirk-Uwe, 51427 Bergisch- Gladbach Refrath (DE)
(74) Vertreter: Drömer, Hans-Carsten

(56) Entgegenhaltungen:
- DE-A- 10 011 639
- US-A- 3 888 328
- US-A- 6 154 696

## Beschreibung

Die Erfindung betrifft ein Verfahren und eine Vorrichtung nach dem Oberbegriff des Ansprüchs 1.

Servolenkungen oder Lenkunterstützungsanordnungen dienen dazu, den Fahrer bei der Steuerung eines Kraftfahrzeugs zu unterstützen, indem sie dem vom Fahrer auf das Lenkrad ausgeübten Drehmoment aktiv ein Unterstützungsdrehmoment hinzufügen. Dadurch kann der Fahrer auch große, schwergängige beziehungsweise mit hohen trägen Massen verbundene Lenksysteme mit relativ geringem Kraftaufwand bewegen.

Aus der DE 43 34 261 A1 ist eine Servolenkung für ein Kraftfahrzeug bekannt, bei welcher das Unterstützungsdrehmoment, das von einem Elektromotor an das Lenksystem bereitgestellt wird, primär aufgrund des Lenkwinkels und der Fahrzeuggeschwindigkeit bestimmt wird. Anders als bei herkömmlichen Systemen wird die Fahrzeuggeschwindigkeit jedoch nicht ausschließlich anhand der Drehzahl der Räder ermittelt. Da es bei einem Blockieren oder einem Schlupf der Räder zu einem Unterschied zwischen der wahren Fahrzeuggeschwindigkeit und der über die Drehzahl der Räder bestimmten Geschwindigkeit kommen kann, werden die Signale eines Antischlupf-Bremssystems herangezogen, um einen realistischeren Schätzwert für die Fahrzeuggeschwindigkeit zu gewinnen. Ferner kann der Regelung auch direkt mitgeteilt werden, ob das Antischlupf-Bremssystem aktiv ist, so dass die Regelung in diesem Falle mit geänderten Parametern, die zum Beispiel die geschätzte Straßenreibung berücksichtigen, arbeiten kann.

Aus der DE 100 11 639 A1 und der US 6 154 696 A sind Kraftfahrzeuge bekannt, die mit einem Lenkunterstützungssystem (Servolenkung) ausgestattet sind und die darüber hinaus eine Antriebskraft- und/oder Bremskraftverteilungseinrichtung besitzen, mit welcher zur Stabilisierung des Fahrverhaltens das Drehmoment unterschiedlich auf die Räder einer Achse verteilt werden kann. Sofern es sich hierbei um eine gelenkte Achse handelt, kann die unterschiedliche Drehmomentverteilung zu einer störenden Lenkkraft im Lenksystem führen. Zur Kompensation dieses sog. "Drehmomentlenkungsphänomens" wird vorgeschlagen, die Differenz der Drehmomente an den Rädern der gelenkten Achse zu erfassen und in Abhängigkeit hiervon in der Servolenkung ein entsprechendes Gegenmoment zu erzeugen.

Bei einer aus der US 3 888 328 A bekannten Servolenkung soll das Gieren eines Fahrzeuges um seine Hochachse, das bei Differenzen in den Bremsmomenten an den Rädern einer gelenkten Achse auftritt, durch ein entsprechendes Zusatzmoment in der Servolenkung kompensiert werden.

In der Automobiltechnik stellt das sogenannte Bremsrattern bzw. Bremsrubbeln (brake judder) ein bekanntes, schwerwiegendes Problem dar, welches der Automobilindustrie erhebliche Kosten aufgrund von Gewährleistungsansprüchen verursacht. Das Bremsrattern beruht auf einer Kette von Ereignissen, an deren Anfang eine ungleiche Abnutzung der Bremsscheiben steht, welche zu einer Dickenvariation der Bremsscheibe (DTV: disk thickness variation) führt. Diese DTV erzeugt eine harmonische Modulation der Bremskraft beim Bremsen. Die Oszillationen der Bremskraft regen wiederum verschiedene Moden der Radaufhängung an, wobei die Vibrationen über eine kinematische Kopplung auf das Lenksystem und insbesondere die Zahnstange der Lenkung übertragen werden. Die Oszillationen der Zahnstange - sofern diese in einem bestimmten kritischen Frequenzbereich liegen - werden wiederum auf das Lenkrad übertragen und regen eine Schwingung des Lenkgetriebes, der Lenksäule und der Räder an. Diese Schwingung wird als Bremsrattern bezeichnet.

Zur Unterdrückung des Bremsratterns sind verschiedene Maßnahmen bekannt, welche jedoch jeweils spezifische Nachteile aufweisen. So kann zum Beispiel das Auftreten von Dickenvariation (DTV) der Bremsscheiben reduziert werden, indem die Bremsbeläge in ihrer nicht aktiven Stellung weiter zurück gezogen werden. Der Nachteil dieser Maßnahme liegt hierbei in einem erhöhten zurückzulegenden Bremspedalweg. Ferner können die Radaufhängungs-Moden durch eine hydraulische Gummihülse gedämpft werden. Dieser Ansatz ist jedoch sehr kostenintensiv. Weiterhin besteht ein Zielkonflikt darin, dass eine optimale Abstimmung entweder nur in Hinblick auf Unwucht-Vibrationen oder nur in Hinblick auf Bremsvibrationen erfolgen kann. Eine Abstimmung in Bezug auf beide Effekte stellt dagegen einen Kompromiss dar, mit welchem in der Regel hinsichtlich keiner der Effekte ein befriedigendes Ergebnis erzielt wird. Des weiteren können hydraulische Dämpfungsvorrichtungen in einer hydraulischen Lenkunterstützung oder externe Lenkungsdämpfer verwendet werden, um die Bremsoszillationen zu dämpfen. Der Nachteil hierbei liegt zum einen in den hohen Kosten, zum anderen in der Verschlechterung des Ansprechens der Lenkung. Schließlich kann auch eine Modenseparation durch eine erhöhte Trägheit des Lenkrades zu Verbesserungen führen. Nachteilig hieran ist die erhöhte Lenkradmasse, welche zu höheren Stabilitätsanforderungen für die Lenksäule und das Lenksystem führt, damit die Zielvorgaben für das Frequenzverhalten des Lenksystems eingehalten werden. Dies führt zu weiteren Kosten- und Gewichtssteigerungen.

Vor diesem Hintergrund war es Aufgabe der vorliegenden Erfindung, ein Verfahren und eine Vorrichtung zur Servolenkung eines Kraftfahrzeugs bereitzustellen, mit welchem bzw. mit welcher in einfacher und kostengünstiger Weise insbesondere bei Bremsvorgängen ein verbessertes Verhalten der Lenkung sichergestellt werden kann.

Diese Aufgabe wird durch ein Verfahren mit den Merkmalen des Patentanspruchs 1 sowie eine Lenkunterstützungsanordnung mit den Merkmalen des Patentanspruchs 6 gelöst. Vorteilhafte Ausgestaltungen sind in den Unteransprüchen enthalten.

Bei dem vorgeschlagenen Verfahren zur Servolenkung eines Kraftfahrzeugs wird dem Lenksystem des Fahrzeugs von einem Motor, vorzugsweise einem Elektromotor, ein Unterstützungsdrehmoment zugeführt. Dieses Unterstützungsdrehmoment hängt unter anderem vom Bremszustand des Kraftfahrzeugs ab und ist dadurch gekennzeichnet, dass es derart festgelegt wird, dass von einer Bremsbetätigung ausgehende mechanische Anregungen (Schwingungen) des Lenksystems unterdrückt werden.

Mit dem erfindungsgemäßen Verfahren wird somit eine Unterdrückung des Bremsratterns bzw. der Bremsenvibration in ein ohnehin in dem Kraftfahrzeug vorhandenes Servolenkungssystem integriert. Diese Integration erfordert dabei lediglich eine Anpassung der Regelung der Servolenkung unter Berücksichtigung des Bremszustandes des Kraftfahrzeugs. Eine derartige Anpassung lässt sich jedoch regelungstechnisch in kostengünstiger Weise verwirklichen.

Der Bremszustand des Kraftfahrzeugs wird bei dem vorgeschlagenen Verfahren vorzugsweise über Signale erfasst, welche die Bremsbetätigung (aktiv oder inaktiv), den zurückgelegten Bremspedalweg, die Bremskraftunterstützung der Servobremse, den Bremsleitungsdruck, den aktuellen Betriebsmodus eines Antiblockiersystems, eine Kurvenfahrt nach Richtung und Ausmaß, die Bremsbeschleunigung des Kraftfahrzeugs und/oder den ESP-Fahrzeugbetriebszustand (ESP®: Electronic Stability Program) betreffen. Je mehr der genannten Größen in Kombination miteinander verwendet werden, um so gezielter kann das Unterstützungsdrehmoment der Servolenkung auf die Bremsvibrationen des Lenksystems reagieren und diese letztendlich unterdrükken.

Gemäß einer bevorzugten Ausgestaltung des Verfahrens setzt sich das Unterstützungsdrehmoment modular aus mehreren Anteilen zusammen, worunter sich insbesondere ein dämpfend wirkender Anteil befinden kann, welcher unter anderem vom Bremszustand des Kraftfahrzeugs abhängt. Die Unterdrückung der Bremsvibrationen findet dabei vornehmlich über ein dämpfend auf das Lenksystem wirkendes Unterstützungsdrehmoment statt.

Die Bestimmung des Unterstützungsdrehmoments oder einzelner Komponenten des Unterstützungsdrehmoments kann gemäß einer vorgegebenen Funktion in Abhängigkeit von der Fahrzeuggeschwindigkeit, dem Lenkwinkel, der Lenkwinkeländerung und/oder dem Lenkdrehmoment erfolgen. Die genannte Funktion kann insbesondere in Form einer Lookup-Tabelle implementiert sein, was in kostengünstiger Weise ein flexibles und individuell anpassbares Verhalten des Unterstützungsdrehmoments erlaubt.

Bei der zuletzt genannten Ausgestaltung des Verfahrens unter Verwendung einer vorgegebenen Funktion oder einer Lookup-Tabelle erfolgt die Berücksichtigung des Bremszustandes des Kraftfahrzeugs vorzugsweise dadurch, dass je nach Bremszustand eine andere Funktion oder Lookup-Tabelle zur Verwendung ausgewählt wird. Auf diese Weise lässt sich in einfacher Weise der Bremszustand des Kraftfahrzeugs ausgehend von den bekannten Steuerungsmethoden der Servolenkung berücksichtigen. Gleichzeitig kann durch eine entsprechend hohe Anzahl der zur Auswahl bereitstehenden Funktionen oder Lookup-Tabellen quasi jede beliebige Genauigkeit bei der Berücksichtigung des Bremszustandes erreicht werden.

Eine verhältnismäßig einfache und gleichzeitig die wichtigsten Fälle abdeckende Berücksichtigung des Bremszustandes in der Servolenkung eines Kraftfahrzeugs kann dadurch erfolgen, dass hinsichtlich des Bremszustandes die drei Fälle
- ungebremster Zustand,
- Bremsen bei Geradeausfahrt, und
- Bremsen bei Kurvenfahrt
unterschieden werden und in jedem der Fälle eine andere Funktion oder Lookup-Tabelle zur Bestimmung des Unterstützungsdrehmoments verwendet wird. Sollte eine höhere Genauigkeit der Regelung gewünscht sein, so können die genannten Fälle - insbesondere diejenigen, bei denen die Bremse aktiv ist - weiter differenziert werden und etwa Details des Bremsvorganges gemäß den oben genannten Signalen über den Bremszustand und/oder das Ausmaß der Kurvenfahrt genauer berücksichtigt werden.

Die Erfindung betrifft ferner eine Lenkunterstützungsanordnung für ein Kraftfahrzeug, welche eine Regelungseinheit zur Festlegung des von einem Motor an das Lenksystem bereitzustellenden Drehmoments aufweist. Die genannte Regelungseinheit weist dabei Signaleingänge für den Empfang von Signalen über den Bremszustand des Kraftfahrzeugs auf und ist dadurch gekennzeichnet, dass diese ein Verfahren der oben erläuterten Art ausführen kann. Die Regelungseinheit ist somit insbesondere derart eingerichtet, dass diese das bereitzustellende Unterstützungsdrehmoment derart festlegt, dass von einer Bremsbetätigung ausgehende mechanische Anregungen des Lenksystems unterdrückt werden.

Die Regelungseinheit kann ferner mit Signaleingängen verbunden sein, über welche die Bremsbetätigung (an/aus), der Bremspedalweg, die Bremskraftunterstützung, der Bremsleitungsdruck, der Betriebsmodus eines Antiblockiersystems (ABS), das Vorliegen einer Kurvenfahrt, die Bremsbeschleunigung und/oder der ESP-Fahrzeugbetriebszustand mitgeteilt werden. Die Regelungseinheit kann ferner modular aufgebaut sein, wobei eines der Module einen dämpfend wirkenden Anteil des Unterstützungsdrehmoments berechnet, welcher vom Bremszustand des Kraftfahrzeugs abhängt. Zu den Signaleingängen der Regelungseinheit können auch Signale betreffend die Fahrzeuggeschwindigkeit, den Lenkwinkel und/oder das Lenkdrehmoment gehören. Vorzugsweise arbeitet die Regelungseinheit mit Hilfe wenigstens einer vorgegebenen Funktion oder einer Lookup-Tabelle, um aus aktuellen Eingangssignalen das anzuwendende Unterstützungsdrehmoment zu bestimmen.

Zur Erzeugung des Unterstützungsdrehmoments weist die Lenkunterstützungsanordnung vorzugsweise einen Elektromotor auf, da sich dieser sehr flexibel ansteuern lässt.

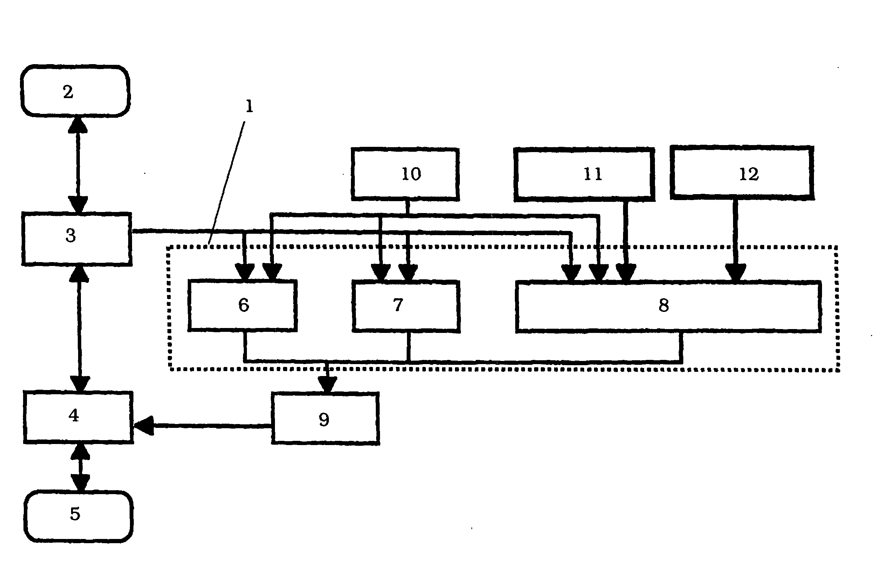

Im Folgenden wird die Erfindung anhand der Zeichnung beispielhaft näher erläutert.

Die einzige Figur zeigt schematisch die Komponenten einer erfindungsgemäßen Lenkunterstützungsanordnung.

Zunächst soll unter Bezugnahme auf die Figur eine herkömmliches Lenkunterstützungsanordnung beschrieben werden, welche die mit den Bezugszeichen 1 bis 10 versehenen Komponenten aufweist. Ausgangspunkt für den Lenkvorgang in einem Kraftfahrzeug ist die Anwendung eines Lenkdrehmoments am Lenkrad 2 durch den Fahrer. Das Lenkdrehmoment wird von dem Lenkrad 2 zu einer Lenker-Zahnstange 5 weitergeleitet und dort in eine entsprechende Schwenkbewegung der Räder (nicht dargestellt) umgesetzt. Zwischen dem Lenkrad 2 und der Zahnstange 5 sind ein Lenkdrehmoment-Sensor 3 zur Erfassung des vom Fahrer aufgebrachten Lenkdrehmoments sowie ein mechanisches Lenkgetriebe 4 angeordnet. In dem mechanischen Lenkgetriebe 4 kann von einem Elektromotor 9 ein Unterstützungsdrehmoment zum Lenkdrehmoment des Fahrers hinzu addiert werden, um den Fahrer bei der Lenkung des Kraftfahrzeugs zu unterstützen.

Die dargestellte Lenkunterstützungsanordnung wird auch als EPAS-System (Electric Power Assiststeering System) bezeichnet. Der Elektromotor wird dabei von einem modular aufgebauten Regler angesteuert, welcher durch entsprechende Signaleingänge Informationen über die Fahrzeuggeschwindigkeit (Sensor 10), den Lenkwinkel, die Lenkwinkeländerung, das Lenkdrehmoment (Sensor 3) und gegebenenfalls weitere Größen erhält. Diese Eingangssignale werden in einem Modul 6 für eine stationäre Verstärkung ("Steady State Boost Curve"), einem Modul 7 für eine Trägheitskontrolle ("Inertia Control") und einem Modul 8 für eine Dämpfungsregelung verarbeitet. Die Dämpfungsregelung dient hauptsächlich dazu, ein Überschwingen der Lenkungsregelung zu verhindern. Dies ist wichtig, da EPAS-Systeme verglichen mit herkömmlichen Lenkungssystemen aufgrund des Übersetzungsverhältnisses Motorgetriebe und der Trägheit des Elektromotors I_{Motor} eine extrem hohe Systemträgheit I_{System} haben (I_{System} = i²_{Motorgetriebe} * I_{Motor}).

Das Dämpfungsdrehmoment wird üblicherweise mit Hilfe einer Lookup-Tabelle oder eines geeigneten Algorithmus bestimmt. Als Eingangsvariable können die oben genannten Signaleingänge für den Regler herangezogen werden. Eine Erhöhung des Dämpfungsanteils führt zu einer verbesserten Unterdrückung von Störungen und Überschwingern. Andererseits werden durch die erhöhte Dämpfung jedoch das Rückkopplungsgefühl der Handlenkung und die Möglichkeit zum entgegengesetzten Lenken verschlechtert. Das Einstellen der Dämpfung auf einen Kompromisswert hat den Nachteil, dass keines der vorgegebenen Lenkungsziele optimal erreicht wird.

Gemäß der vorliegenden Erfindung wird das an sich bekannte EPAS-System dazu eingesetzt, um eine Unterdrückung des Bremsratterns bzw. von Bremsvibrationen zu erzielen. Wie eingangs erläutert, kann das Bremsrattern insbesondere aufgrund ungleicher Abnutzung der Bremsscheiben ausgelöst werden, wobei sich die von den Bremsen ausgehenden Oszillationen durch kinematische Kopplung zum Lenksystem fortpflanzen.

Zur Verwirklichung des genannten Zieles weist die erfindungsgemäße Regelungseinheit 1 weitere Signaleingänge auf, die den Bremszustand beziehungsweise hierfür relevante Größen anzeigen. Bei der in der Figur dargestellten Ausgestaltung sind insbesondere zwei weitere Signaleingänge vorgesehen, welche ausschließlich zum Dämpfungsmodul 8 innerhalb der Regelungseinheit 1 geführt sind. Im Rahmen der vorliegenden Erfindung ist es jedoch ohne weiteres auch möglich, mehr oder weniger Signaleingänge als dargestellt zu verwenden und diese alternativ oder zusätzlich mit anderen Modulen der Regelungseinheit 1 zu verbinden.

Im einfachsten Falle kann der Regelungseinheit 1 beziehungsweise dem Dämpfungsmodul 8 von einem Bremsbetätigungs-Modul 11 lediglich ein binäres Signal darüber bereitgestellt werden, ob die Bremse in Aktion ist oder nicht. Abhängig hiervon kann das Dämpfungsmodul 8 dann mit verschiedenen Lookup-Tabellen arbeiten, um ein dämpfendes Unterstützungsdrehmoment in Abhängigkeit von den restlichen Fahrzeugparametern wie etwa dem Lenkwinkel oder der Fahrzeuggeschwindigkeit zu bestimmen.

Eine Verfeinerung einer derartigen Regelung kann durch die Berücksichtigung eines Signals von einem Kurvenfahrt-Modul 12 stattfinden. Auch dieses Signal kann im einfachsten Falle binär sein, das heißt lediglich zwischen einer Geradeausfahrt und einer Kurvenfahrt unterscheiden. Die Detektion einer Kurvenfahrt kann zum Beispiel aus der Information über den Lenkwinkel, über das Lenkdrehmoment und die Fahrzeuggeschwindigkeit, oder über eine entsprechende Kurvenfahrtdetektion aus dem ABS oder ESP-System erfolgen. Bei Verwendung eines binären Signals der Bremsbetätigung 11 und eines binären Signals der Kurvenfahrt 12 werden im Dämpfungsmodul 8 vorzugsweise drei verschiedene Lookup-Tabellen verwendet, welche den Zuständen
- keine Bremsbetätigung (mit oder ohne Kurvenfahrt),
- Bremsbetätigung ohne Kurvenfahrt, und
- Bremsbetätigung mit Kurvenfahrt
entsprechen.

Eine weitere Verbesserung des Regelungsverhaltens im Dämpfungsmodul 8 kann erzielt werden, wenn das Bremsbetätigungs-Modul 11 und/oder das Kurvenfahrt-Modul 12 kontinuierliche Signale betreffend das Ausmaß des Bremsvorganges und/oder das Ausmaß der Kurvenfahrt bereitstellen. In diesem Falle kann im Modul 8 eine entsprechend höhere, den Bedürfnissen angepasste Anzahl an Lookup-Tabellen verwendet werden. Ebenso könnte die Dimension der verwendeten Lookup-Tabellen für die Berücksichtigung des Ausmaßes des Bremsens und/oder des Ausmaßes der Kurvenfahrt erhöht werden. Alternativ zur Verwendung einer Lookup-Tabelle kann das Modul 8 auch mit einer Funktion arbeiten, welche zusätzlich von den Werten für das Ausmaß des Bremsens und/oder das Ausmaß der Kurvenfahrt abhängt.

Neben den beispielhaft dargestellten binären oder kontinuierlichen Signalen für die Bremsbetätigung und/oder die Kurvenfahrt kann das Regelungssystem 1 auch Signale über den zurückgelegten Weg des Bremspedals, das Ausmaß einer (Servo-)Bremskraftunterstützung, den Bremsleitungsdruck, den Betriebsmodus eines ABS-Systems, die von einem Beschleunigungssensor oder Beobachtungsmodul erfasste Bremsbeschleunigung oder eine Information über den ESP-Fahrzeugbetriebszustand verwenden. Da derartige Informationen in der Regel ohnehin in einem Fahrzeug erfasst werden, ist ihre Übermittlung an die Regelungseinheit 1 des Lenkunterstützungssystems nur mit geringem Aufwand verbunden.

Wie vorstehend bereits erläutert, können abweichend von der in der Figur dargestellten Situation die Signale über den Bremszustand auch den übrigen Modulen (statisches Verstärkungsmodul 6, Trägheitsmodul 7, Reibungsmodul etc., soweit vorhanden) zur Verfügung gestellt werden, welche diese Signale ähnlich wie erläutert verarbeiten.

Ferner kann das geschilderte Verfahren verwendet werden, um die Bremsstabilität zu verbessern. Aufgrund einer Kombination verschiedener Effekte im Reifen- und Radaufhängungssystem wird die Fahrzeugstabilität vermindert. Diese Situation kann verbessert werden, falls das EPAS-System eines der oben beschriebenen Bremserkennungsverfahren verwendet durch
- erhöhte Dämpfung,
- reduzierte Trägheitskompensation,
- reduzierte Reibungskompensation,
- eine modifizierte statische Verstärkungskurve, welche im Bremsmodus insbesondere eine stärker betonte Verriegelung im Zentrum erzeugt.

## Patentansprüche

1. Verfahren zur Regelung einer Kraftfahrzeug-Servolenkung, wobei dem Lenksystem (2, 4, 5) von einem Motor (9) ein Unterstützungsdrehmoment zugeführt wird, welches aus mehrere Komponenten besteht, die gemäß einer vorgegebenen Funktion und/oder einer Lookup-Tabelle in Abhängigkeit von der Fahrzeuggeschwindigkeit (10), dem Lenkwinkel, der Lenkwinkeländerung und/oder dem Lenkdrehmoment (3) bestimmt werden, **dadurch gekennzeichnet, dass** die vorgegebene Funktion und/oder Lookup-Tabelle mindestens einer Komponente derart festgelegt wird, dass von einer Bremsbetätigung aufgrund von Dickenvariation einer Bremsscheibe angeregte mechanische Schwingungen des Lenksystems unterdrückt werden.

2. Verfahren nach Anspruch 1, **dadurch gekennzeichnet, dass** zur Bestimmung des Bremszustandes ein oder mehrere Signale aus der Gruppe der Signale der Bremsbetätigung, des Bremspedalwegs, der Bremskraftunterstützung und/oder des Bremsleitungsdrucks herangezogen werden.

3. Verfahren nach Anspruch 1 oder 2, **dadurch gekennzeichnet, dass** zur Bestimmung des Bremszustandes ein oder mehrere Signale aus der Gruppe der Signale des Betriebsmodus des Antiblockiersystems, der Kurvenfahrt, der Bremsbeschleunigung des Kraftfahrzeugs und/oder des ESP-Fahrzeugbetriebszustands herangezogen werden.

4. Verfahren nach mindestens einem der Ansprüche 1 bis 3, **dadurch gekennzeichnet, dass** zwischen verschiedenen Funktionen oder Lookup-Tabellen bei Übergängen zwischen den Zuständen der ungebremsten Fahrt, des Bremsens bei Geradeausfahrt und des Bremsens bei Kurvenfahrt gewechselt wird.

5. Verfahren nach Anspruch 4, **dadurch gekennzeichnet, dass** die gewählte Funktion oder Lookup-Tabelle vom Ausmaß des Bremsens und/oder der Kurvenfahrt abhängt.

6. Lenkunterstützungsanordnung für ein Kraftfahrzeug, enthaltend eine Regelungseinheit (1) zur Festlegung des von einem Motor (9) an das Lenksystem (2, 4, 5) bereitzustellenden Unterstützungsdrehmoments, wobei die Regelungseinheit (1) Signaleingänge für Signale entsprechend dem Bremszustand des Kraftfahrzeugs aufweist, **dadurch gekennzeichnet, dass** die Regelungseinheit (1) derart eingerichtet ist, dass diese ein Verfahren nach einem der Ansprüche 1 bis 5 ausführen kann.

7. Lenkunterstützungsanordnung nach Anspruch 6, **dadurch gekennzeichnet, dass** diese einen Elektromotor (9) zur Erzeugung des Unterstützungsdrehmoments aufweist.

## Claims

1. Method for controlling a motor vehicle power-steering system, a supporting being supplied to the steering system (2, 4, 5) by a motor (9), which supporting torque consists of several components, which are determined in accordance with a predefined function and/or a lookup table as a function of the vehicle speed (10), the steering angle, the change in the steering angle and/or the steering torque (3) **characterized in that** the predefined function and/or lookup table of at least one component are defined in such a way that mechanical oscillations of the steering system which originate from an activation of the brakes are suppressed as a result of thickness variation of the brake disc.

2. Method according to Claim 1, **characterized in that** one or more signals from the group of signals for braking activation, for brake pedal displacement distance, for braking force support, for the brake line pressure are used to determine the braking state.

3. Method according to Claim 1 or 2, **characterized in that** one or more signals from the group of signals for the operating mode of the anti-lock braking system, for cornering, for braking acceleration of the motor vehicle and/or for the ESP vehicle operating state are used to determine the braking state.

4. Method according to at least one of Claims 1 to 3, **characterized in that** the system changes over between different functions or lookup tables at transitions between the states of unbraked travel, braking when travelling straight ahead and braking when cornering.

5. Method according to Claim 4, **characterized in that** the selected function or lookup table depends on the degree of braking and/or of cornering.

6. Power-steering arrangement for a motor vehicle containing a control unit (11) for defining the supporting torque which is to be made available to the steering system (2,4,5) by a motor (9), the control unit (1) having signal inputs for signals corresponding to the braking state of the motor vehicle, **characterized in that** the control unit (1) is set up in such a way that it can carry out a method according to one of Claims 1 to 5.

7. Power-steering arrangement according to Claim 6, **characterized in that** it has an electric motor (9) for generating the supporting torque.

## Revendications

1. Procédé pour réguler une direction assistée de véhicule automobile, un couple d'assistance étant acheminé par un moteur (9) au système de direction (2, 4, 5), lequel est constitué de plusieurs composantes qui sont déterminées selon une fonction prédéfinie et/ou un tableau de correspondance en fonction de la vitesse du véhicule (10), de l'angle de direction, du changement de l'angle de direction et/ou du couple de direction (3), **caractérisé en ce que** la fonction prédéfinie et/ou le tableau de correspondance d'au moins une composante est défini de telle sorte que les vibrations mécaniques du système de direction initiées par un actionnement du frein en raison de la variation d'épaisseur d'un disque de frein soient inhibées.

2. Procédé selon la revendication 1, **caractérisé en ce que** pour déterminer l'état du frein, on utilise un ou plusieurs signaux du groupe composé des signaux d'actionnement du frein, de la course de la pédale de frein, de l'assistance à la force de freinage et/ou de la pression dans la conduite de frein.

3. Procédé selon la revendication 1 ou 2, **caractérisé en ce que** pour déterminer l'état du frein, on utilise un ou plusieurs signaux du groupe composé des signaux du mode de fonctionnement du système antiblocage, de la trajectoire en virage, de l'accumulation de freinage du véhicule automobile et/ou de l'état de fonctionnement du véhicule ESP.

4. Procédé selon au moins l'une des revendications 1 à 3, **caractérisé en ce que** l'on change entre différentes fonctions ou différents tableaux de correspondance lors des transitions entre les états de déplacement sans freinage, de freinage avec déplacement en ligne droite et de freinage en virage.

5. Procédé selon la revendication 4, **caractérisé en ce que** la fonction ou le tableau de correspondance sélectionné dépend de l'importance du freinage et/ou du virage.

6. Arrangement de direction assistée pour un véhicule automobile comprenant une unité de régulation (1) destinée à déterminer le couple d'assistance à fournir au système de direction (2, 4, 5) par un moteur (9), l'unité de régulation (1) présentant des entrées de signal pour des signaux correspondant à l'état de freinage du véhicule automobile, **caractérisé en ce que** l'unité de régulation (1) est configurée de manière à pouvoir mettre en oeuvre un procédé selon l'une des revendications 1 à 5.

7. Arrangement de direction assistée selon la revendication 6, **caractérisé en ce qu'**il présente un moteur électrique (9) destiné à générer le couple d'assistance.
